# FASCICULE DE BREVET EUROPEEN

(11) **EP 3 925 018 B1**
(45) Date de publication et mention de la délivrance du brevet: **01.05.2024**
(21) Numéro de dépôt: 20705247.3
(22) Date de dépôt: 24.01.2020
(51) Int. Cl.: H01M 10/613, H01M 10/625, H01M 10/6557, H01M 10/6568, H01M 10/04, B60L 50/64, H01M 50/211, H01M 50/227, H01M 50/249

(54) **UNITÉ DE BATTERIE ET VEHICULE AUTOMOBILE EQUIPÉ D'AU MOINS UNE TELLE UNITÉ**
BATTERIEEINHEIT UND FAHRZEUG MIT MINDESTENS EINER SOLCHEN BATTERIEEINHEIT AUSGESTATTET
BATTERY UNIT AND VEHICLE EQUIPED WITH AT LEAST ONE SUCH BATTERY UNIT

(30) Priorité: 15.02.2019 FR 1901573
(43) Date de publication de la demande: 22.12.2021
(73) Titulaire: NOVARES France, 78140 Vélizy-Villacoublay (FR)
(72) Inventeur: BRUZZESE, Daniel, 05000 GAP (FR)
(74) Mandataire: Germain Maureau
(86) Numéro de dépôt international: PCT/FR2020/050115
(87) Numéro de publication internationale: WO 2020/165517

(56) Documents cités:
- US-A1- 2010 104 927
- US-A1- 2012 040 225
- US-A1- 2016 344 071

## Description

La présente invention concerne le domaine des sources d'énergie électrique autonomes, en particulier celles embarquées dans des véhicules automobiles, et a pour objet une unité de batterie et un véhicule automobile électrique ou hybride équipé d'au moins une telle unité.

Les véhicules électriques ou hybrides sont équipés de batteries permettant de stocker l'énergie électrique nécessaire à leur fonctionnement. Les enjeux actuels nécessitent d'optimiser la conception des batteries afin d'en tirer les meilleures performances en terme de durée de vie et d'autonomie de roulage. Le temps de charge est également un facteur important dans l'utilisation quotidienne de ces batteries. A cet effet, des batteries à haute densité de stockage sont de plus en plus utilisées. Elles sont généralement formées d'une pluralité de cellules de batteries connectées en série ou en parallèle, les cellules de batterie pouvant être regroupées physiquement sous forme de blocs ou de modules.

Ces batteries à haute densité de stockage ont idéalement besoin de fonctionner à des températures comprises entre 20°C et 40 °C. Une température trop élevée peut impacter de manière importante la durée de vie de ces batteries. Il est donc nécessaire d'évacuer de manière efficace la chaleur générée par les cellules de batteries.

Dans le cadre des applications embarquées sur véhicule, il existe des solutions de batteries refroidies par air mais l'échange thermique reste assez limité. La tendance actuelle est d'utiliser un liquide de refroidissement afin d'améliorer les échanges thermiques et d'augmenter l'efficacité du refroidissement. L'art antérieur comprend les documents suivants, qui sont pertinents à l'invention : US 2016/344071 A1, US 2010/104927 A1 et US 2012/040225 A1.

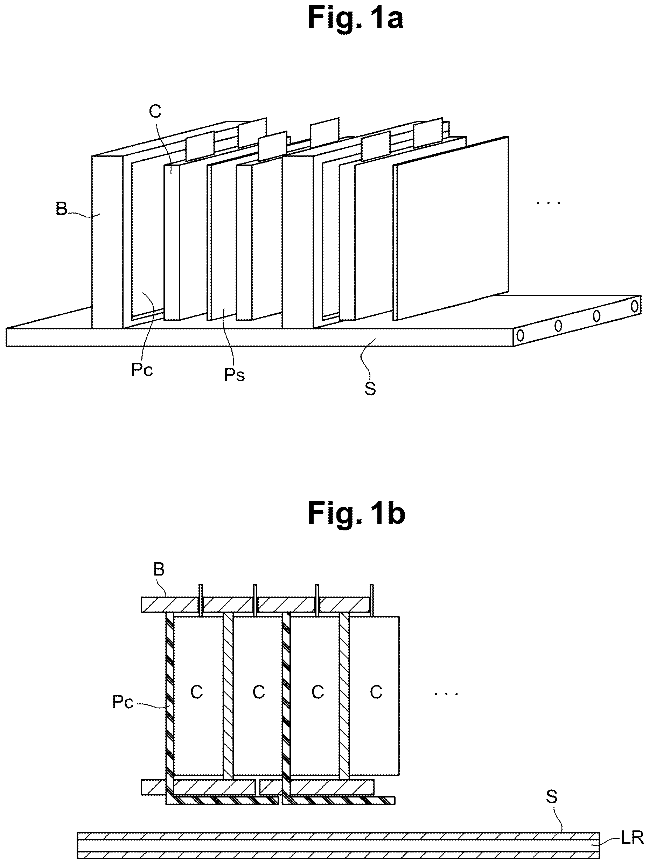

Une des solutions existantes utilisant un liquide de refroidissement est représentée sur les Fig. 1a et 1b et repose sur le principe d'un support de base S à travers lequel circule un liquide de refroidissement LR et sur lequel reposent un boîtier B en plastique logeant des cellules de batterie C regroupées sous forme de blocs de plusieurs cellules C séparées entre elles par des plaques de séparation PS en mousse, le transfert thermique entre les cellules de batterie C et le support de base S étant assuré au moyen de plaques conductrices PC en aluminium. Chaque plaque conductrice PC possède en particulier une forme en L, l'une des branches du L étant disposée entre deux blocs de cellules adjacents, et l'autre branche du Létant en contact avec le support de base S. Cette solution connue présente toutefois l'inconvénient d'allonger de manière exagérée le circuit de transfert thermique ce qui limite l'efficacité du refroidissement. Par ailleurs, le coût de fabrication et de montage de telles structures de batteries est relativement élevé.

L'invention vise donc à proposer une solution alternative à cette solution existante et ne présentant pas les inconvénients précités.

A cet effet, l'invention a pour objet une unité de batterie selon la revendication 1.

L'unité de batterie de l'invention pourra également comporter une ou plusieurs des caractéristiques suivantes :
- chaque plaque de refroidissement est formée dans un matériau plastique et comporte une pluralité de canaux internes s'étendant depuis une extrémité supérieure débouchant dans le canal de refroidissement de la paroi supérieure jusqu'à une extrémité inférieure débouchant dans le canal de refroidissement de la paroi inférieure, permettant ainsi une circulation du liquide de refroidissement de la paroi supérieure vers la paroi inférieure au travers desdits canaux internes.
- les plaques de refroidissement sont formées dans un matériau possédant une conductivité thermique élevée.
- le matériau constitutif des plaques de refroidissement possède une conductivité thermique supérieure ou égale à 20 W.m⁻¹.K⁻¹, et, de préférence, supérieure ou égale à 100 W.m⁻¹.K⁻¹.
- les plaques de refroidissement sont formées dans un matériau plastique conducteur thermiquement.
- les plaques de refroidissement sont formées en aluminium.
- les plaques de refroidissement sont sensiblement plates.
- les plaques de refroidissement sont surmoulées avec le boîtier.
- les plaques de refroidissement sont collées sur le boîtier.
- le boîtier est muni d'au moins un orifice d'entrée et d'au moins un orifice de sortie, ledit orifice d'entrée, respectivement de sortie, communiquant avec le canal de refroidissement de manière à permettre l'entrée, respectivement la sortie, du liquide de refroidissement à l'intérieur, respectivement à l'extérieur, du boîtier.
- le boîtier est formé par l'assemblage de plusieurs panneaux de boîtier fixés ensemble par des moyens de connexion, lesdits panneaux de boîtier comprenant au moins deux panneaux d'extrémité disposés à chacune des extrémités du boîtier et une pluralité de panneaux intermédiaires intercalés entre lesdits panneaux d'extrémité.
- les moyens de connexion sont des vis coopérant avec des filetages correspondant formés à l'intérieur des panneaux de boîtier.
- au moins l'un des panneaux d'extrémité est équipé d'un orifice d'entrée et/ou d'un orifice de sortie, ledit orifice d'entrée et/ou de sortie communiquant avec le canal de refroidissement de manière à permettre l'entrée, respectivement la sortie, du liquide de refroidissement à l'intérieur, respectivement à l'extérieur, du boîtier.
- chaque panneau de boîtier est solidaire d'une seule plaque de refroidissement.

L'invention concerne également un véhicule automobile, en particulier électrique ou hybride, équipé d'au moins une unité de batterie telle que décrite ci-dessus.

D'autres aspects et avantages de l'invention apparaîtront à la lecture de la description qui suit, donnée à titre d'exemple et faite en référence aux dessins annexés, dans lesquels :
[Fig.1a] est une vue en perspective éclatée d'une unité de batterie selon l'art antérieur ;
[Fig.1b] est une vue en coupe transversale de l'unité de batterie de la Fig. 1a ;
[Fig.2] est une vue en perspective éclatée d'une première configuration d'une unité de batterie qui n'est pas selon l'invention ;
[Fig.3] est une vue de face d'une plaque de refroidissement utilisée dans l'unité de batterie représentée sur la Fig. 2 ;
[Fig.4] est une vue en coupe transversale partielle de l'unité de batterie représentée sur la Fig. 2 ;
[Fig.5] est une vue en perspective éclatée d'une deuxième configuration d'une unité de batterie qui n'est selon l'invention que quand la plaque de refroidissement est celle de la figure 8 ;
[Fig.6] est une vue en perspective d'un des panneaux de boîtier de l'unité de batterie représentée sur la Fig. 5, sur lequel a été fixée une plaque de refroidissement ;
[Fig.7a] est une vue en coupe selon le plan de coupe AA de la Fig. 6 ;
[Fig.7b] est une vue en coupe selon le plan de coupe BB de la Fig. 6 ;
[Fig.8] est une vue en coupe transversale partielle de l'unité de batterie selon la Fig. 5, dans laquelle la forme des plaques de refroidissement diffère de celle représentée sur les Fig. 7a et 7b ;
[Fig.9] est une vue schématique montrant le circuit du liquide de refroidissement à l'intérieur de l'unité de batterie selon la Fig. 5 ;
[Fig.10] est une vue de face du panneau de boîtier représenté sur la Fig. 6 ;
[Fig.11] est une vue en perspective du boîtier de l'unité de batterie représentée sur la Fig. 2 ;
[Fig.12] est un diagramme représentant les variations de température (exprimée en °C) des cellules de batterie en fonction des cycles de refroidissement (exprimés en secondes) dans une unité de batterie selon l'art antérieur ;
[Fig.13] est un diagramme représentant les variations de température (exprimée en °C) des cellules de batterie en fonction des cycles de refroidissement (exprimés en secondes) dans une unité de batterie selon un premier exemple de réalisation de l'invention ;
[Fig.14] est un diagramme représentant les variations de température (exprimée en °C) des cellules de batterie en fonction des cycles de refroidissement (exprimés en secondes) dans une unité de batterie selon un deuxième exemple de réalisation de l'invention ;
[Fig.15] est un diagramme représentant les variations de température (exprimée en °C) des cellules de batterie en fonction des cycles de refroidissement (exprimés en secondes) dans une unité de batterie selon un troisième exemple de réalisation de l'invention.

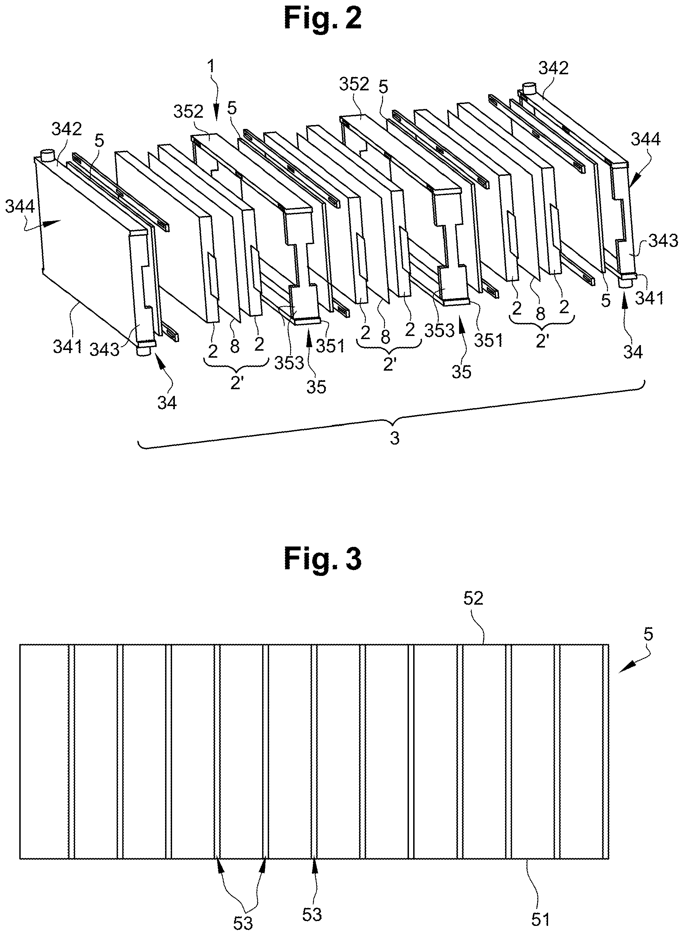

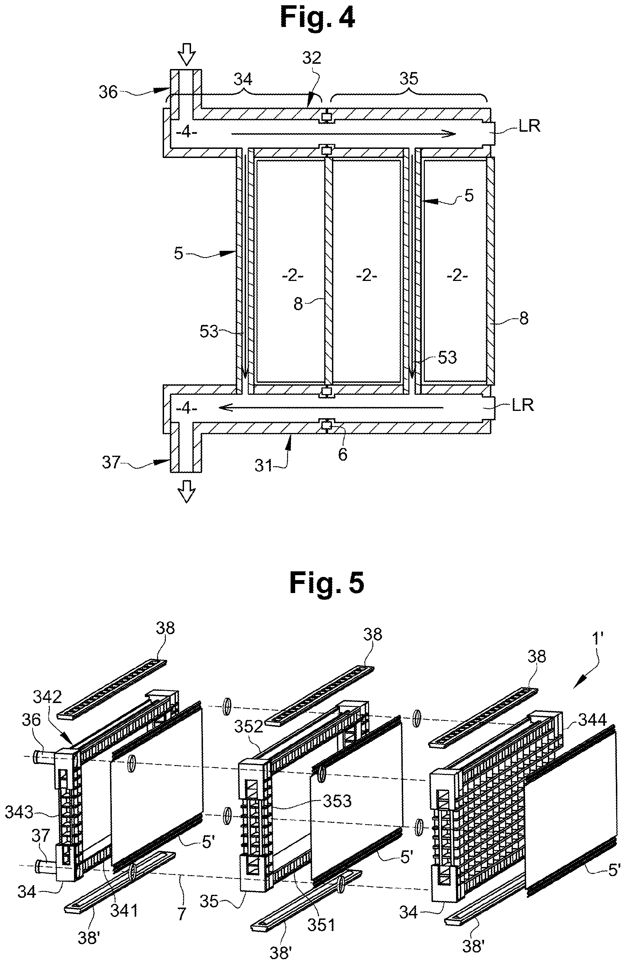

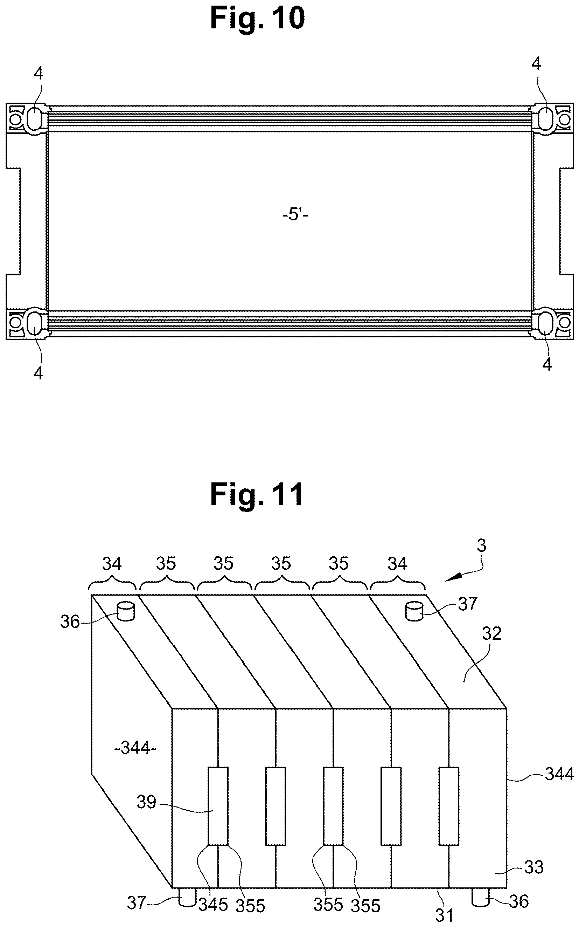

En référence à la Fig. 2, il est représenté une unité de batterie 1 selon une première configuration de l'invention. Cette unité de batterie 1 comprend une pluralité de cellules de batterie 2, regroupées physiquement en modules 2' de deux cellules de batteries 2 séparées par une paroi en mousse 8. Dans d'autres configurations envisageables de l'invention, le nombre de cellules de batterie 2 dans chacun des modules 2' pourra être supérieur à deux ou chaque module 2' pourra ne comporter qu'une seule cellule de batterie 2. Les cellules de batterie 2 sont disposées à l'intérieur d'un boîtier 3 en matière plastique formé par l'assemblage de deux panneaux d'extrémité 34 disposés à chacune des extrémités du boîtier 3 et d'une pluralité de panneaux intermédiaires 35 intercalés entre lesdits panneaux d'extrémité 34. Lesdits panneaux 34, 35 possèdent sensiblement une forme de parallélépipède rectangle et comportent chacun une paroi inférieure, respectivement 341 et 351, et une paroi supérieure, respectivement 342 et 352, lesdites parois inférieure et supérieure 341, 342 et 351, 352 étant reliées par des parois latérales 343 et 353 respectivement. Les panneaux d'extrémité 34 comportent par ailleurs une paroi transversale 344 qui est perpendiculaire à la fois aux parois inférieure et supérieure 341, 342 et aux parois latérales 343. Le boîtier 3 ainsi obtenu, tel que représenté sur la Fig. 11, possède sensiblement une forme de parallélépipède rectangle et comporte une paroi inférieure 31 disposée au-dessous des cellules de batterie 2 et une paroi supérieure 32 disposée au-dessus des cellules de batterie 2, lesdites parois inférieure et supérieure 31, 32 étant reliées par des parois latérales 33 disposées de chaque côté des cellules de batterie 2. Comme représenté sur la Fig. 4, les panneaux 34 et 35 étant jointifs, les parois inférieure 31, supérieure 32 et latérales 33 du boîtier 3 sont définies respectivement par la juxtaposition des parois inférieures 341, 351, des parois supérieures 342, 352, et des parois latérales 343, 353 des panneaux 34, 35. Le boîtier 3 est par ailleurs délimité de chaque côté par les parois transversales 344 des panneaux d'extrémité 34. En outre, les parois latérales 353 des panneaux intermédiaires 35 comportent deux rainures centrales 355 à profil en U conférant une forme sensiblement en I à chacune des parois latérales 353, chacune des rainures centrales 355 faisant face soit à une rainure centrale 355 d'un panneau intermédiaire 35 adjacent, soit à une rainure centrale 345 formée dans un des panneaux d'extrémité 34. Les rainures centrales 345 et 355 sont configurées pour définir une pluralité d'ouvertures 39 dans les parois latérales 33 du boîtier 3, lesdites ouvertures 39 permettant aux bornes de connexion électrique des cellules de batterie 2 de dépasser hors du boîtier 3 et d'être ainsi connectées électriquement à un moteur d'un véhicule électrique.

Comme illustré sur la Fig. 4, chacune des parois inférieure et supérieure 31, 32 du boîtier 3 est traversée par un canal de refroidissement 4, le long duquel peut s'écouler un liquide de refroidissement LR. Chaque canal de refroidissement 4 s'étend notamment depuis un orifice d'entrée 36, formé à la périphérie d'un des panneaux d'extrémités 34, jusqu'à un orifice de sortie 37, formé à la périphérie du panneau d'extrémité 34 opposé. Chaque canal de refroidissement 4 sera avantageusement configuré pour couvrir l'intégralité de la surface rectangulaire de la paroi inférieure 31 ou supérieure 32. Les orifices d'entrée 36 et de sortie 37 permettent l'entrée, respectivement la sortie, du liquide de refroidissement LR à l'intérieur du boîtier 3 et sont en communication fluidique avec le canal de refroidissement 4 correspondant. Le liquide de refroidissement LR pourra ainsi circuler à l'intérieur des parois 31, 32 depuis l'orifice d'entrée 36 jusqu'à l'orifice de sortie 37. De manière à éviter une fuite du liquide de refroidissement LR au niveau de la jonction entre deux panneaux adjacents du boîtier 3, il est avantageusement prévu des joints d'étanchéité 6 en prise mutuelle avec chacun des panneaux adjacents.

Par ailleurs, comme représenté sur les Fig. 2 et 4, les parois inférieure et supérieure 31, 32 du boîtier 3 sont reliées par une pluralité de plaques de refroidissement 5, chaque plaque de refroidissement 5 étant disposée entre deux modules 2' de cellules de batterie 2 adjacents ou étant en contact avec au moins une cellule de batterie 2. Ces plaques de refroidissement 5 sont formées en matière plastique et seront avantageusement coextrudées avec le boîtier 3. Comme représenté sur la Fig. 3, ces plaques de refroidissement 5 sont traversées par une pluralité de canaux internes 53 s'étendant depuis une extrémité supérieure 52 débouchant dans le canal de refroidissement 4 de la paroi supérieure 32 jusqu'à une extrémité inférieure 51 débouchant dans le canal de refroidissement 4 de la paroi inférieure 31, permettant ainsi une circulation du liquide de refroidissement LR de la paroi supérieure 32 vers la paroi inférieure 31 au travers desdits canaux internes 53. Ainsi, la chaleur générée par les cellules de batterie 2 sera d'abord transmise aux plaques de refroidissement 5, puis directement au liquide de refroidissement LR circulant à l'intérieur desdites plaques de refroidissement 5, puis à l'intérieur des parois inférieure et supérieure 31, 32 du boîtier 3.

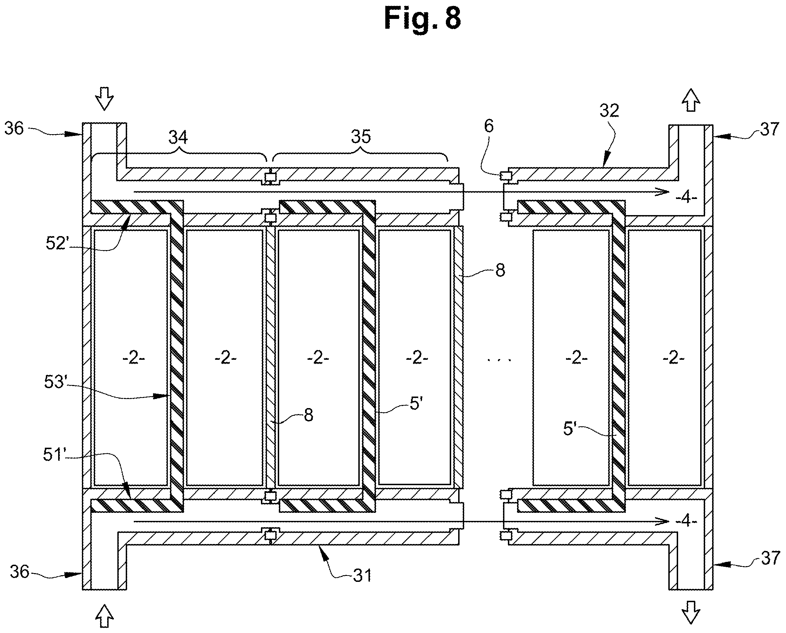

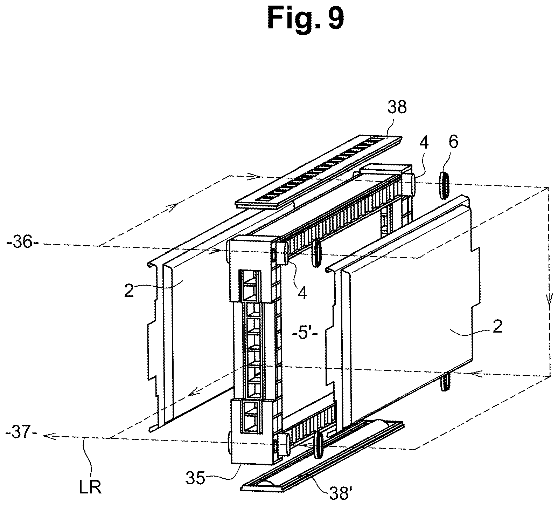

En référence à la Fig. 5, il est représenté une unité de batterie 1' selon une deuxième configuration de l'invention. Cette unité de batterie 1' comprend une pluralité de cellules de batterie 2, qui n'ont pas été représentées par souci de simplification sur la Fig. 5 mais qui sont visibles sur les Fig. 8 et 9. Comme dans la première configuration, ces cellules de batterie pourront être regroupées physiquement en modules de deux ou plusieurs cellules de batteries 2 séparées par une paroi en mousse 8. Les cellules de batterie 2 sont disposées à l'intérieur d'un boîtier 3 en matière plastique sensiblement similaire à celui représenté sur la Fig. 11. Le boîtier 3 est notamment formé par l'assemblage au moyen de vis 7 de deux panneaux d'extrémité 34 disposés à chacune des extrémités du boîtier 3 et d'une pluralité de panneaux intermédiaires 35 intercalés entre lesdits panneaux d'extrémité 34. Lesdits panneaux 34, 35 possèdent sensiblement une forme de parallélépipède rectangle et comportent chacun une paroi inférieure, respectivement 341 et 351, et une paroi supérieure, respectivement 342 et 352, lesdites parois inférieure et supérieure 341, 342 et 351, 352 étant reliées par des parois latérales 343 et 353 respectivement. Les parois supérieure 342, 352 et inférieure 341, 351 des panneaux 34, 35 sont avantageusement recouverts de plaques de protection 38 et 38' respectivement. Les panneaux d'extrémité 34 comportent par ailleurs une paroi transversale 344 qui est perpendiculaire à la fois aux parois inférieure et supérieure 341, 342 et aux parois latérales 343. Comme représenté sur la Fig. 8, les panneaux 34 et 35 étant jointifs, les parois inférieure 31, supérieure 32 et latérales 33 du boîtier 3 sont définies respectivement par la juxtaposition des parois inférieures 341, 351, des parois supérieures 342, 352, et des parois latérales 343, 353 des panneaux 34, 35. Le boîtier 3 est par ailleurs délimité de chaque côté par les parois transversales 344 des panneaux d'extrémité 34.

Comme illustré sur les Fig. 5, 9 et 10, les parois inférieure et supérieure 31, 32 du boîtier 3 sont traversées par un unique canal de refroidissement 4, le long duquel peut s'écouler un liquide de refroidissement LR. Le canal de refroidissement 4 s'étend notamment depuis un orifice d'entrée 36, formé à la périphérie d'un des panneaux d'extrémités 34 et dans sa partie haute, jusqu'à un orifice de sortie 37, formé à la périphérie de ce même panneau d'extrémité 34 et dans sa partie basse. Le canal de refroidissement 4 est notamment de forme tubulaire et est configuré pour couvrir d'abord tout le pourtour rectangulaire de la paroi supérieure 32, avant de descendre verticalement le long d'un des panneaux d'extrémité 34, puis de couvrir tout le pourtour rectangulaire de la paroi inférieure 31. Les orifices d'entrée 36 et de sortie 37 permettent l'entrée, respectivement la sortie, du liquide de refroidissement LR à l'intérieur du boîtier 3 et sont en communication fluidique avec ledit canal de refroidissement 4. Le liquide de refroidissement LR pourra ainsi circuler à l'intérieur des parois 31, 32 depuis l'orifice d'entrée 36 jusqu'à l'orifice de sortie 37. Dans la configuration représentée sur la Fig. 8, chacune des parois inférieure et supérieure 31, 32 du boîtier 3 est traversée par un canal de refroidissement 4. Chaque canal de refroidissement 4 s'étend depuis un orifice d'entrée 36, formé à la périphérie d'un des panneaux d'extrémités 34, jusqu'à un orifice de sortie 37, formé à la périphérie du panneau d'extrémité 34 opposé. Chaque canal de refroidissement 4 est notamment de forme tubulaire et est configuré pour couvrir tout le pourtour rectangulaire de la paroi inférieure 31 ou supérieure 32. De manière à éviter une fuite du liquide de refroidissement LR au niveau de la jonction entre deux panneaux adjacents du boîtier 3, il est avantageusement prévu de disposer des joints d'étanchéité tubulaires 6 autour du canal de refroidissement 4, à la jonction entre deux panneaux adjacents.

Par ailleurs, comme représenté sur Fig. 5 à 8, les parois inférieure et supérieure 31, 32 du boîtier 3 sont reliées par une pluralité de plaques de refroidissement 5', chaque plaque de refroidissement 5' étant solidarisée à un des panneaux 34, 35 du boîtier 3 et étant disposée de manière à être en contact avec au moins une cellule de batterie 2. Ces plaques de refroidissement 5' sont formées dans un matériau possédant une conductivité thermique élevée. Ce matériau possèdera avantageusement une conductivité thermique supérieure ou égale à 20 W.m⁻¹.K⁻¹. Les plaques de refroidissement 5' pourront par exemple être formées en aluminium, ou dans un matériau plastique conducteur thermiquement. Toutefois, il sera également envisageable d'utiliser des plaques de refroidissement 5' à conductivité thermique inférieure à 20 W.m⁻¹.K⁻¹. La conductivité thermique des plaques de refroidissement 5' variera en fonction de leur épaisseur.

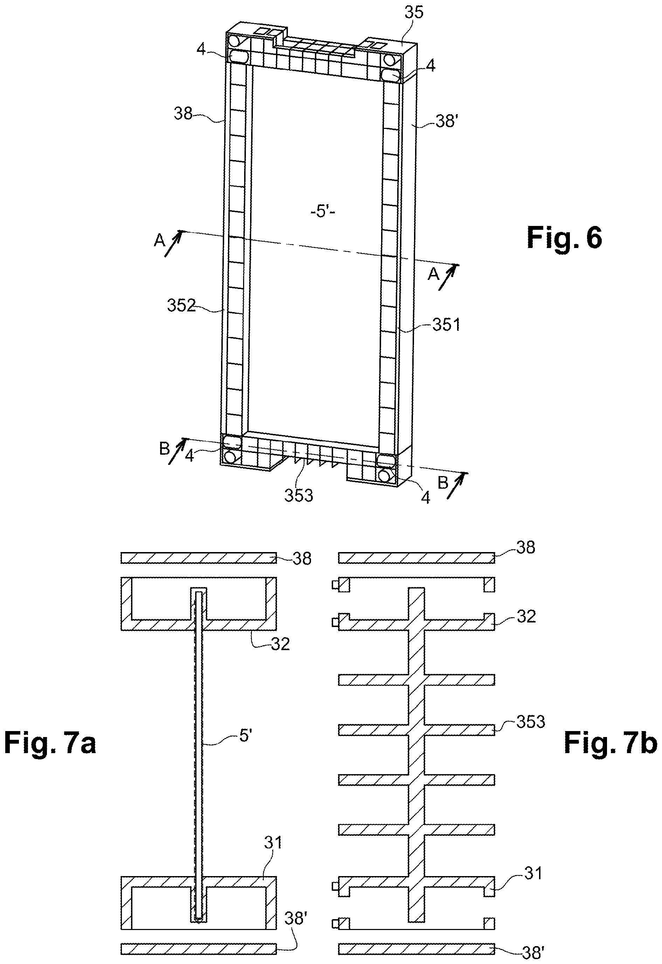

Dans la configuration représentée sur les Fig. 6, 7a et 7b, les plaques de refroidissement 5' sont sensiblement plates et sont surmoulées avec les panneaux 34, 35 du boîtier 3 au niveau de leurs extrémités. Ainsi, la chaleur générée par les cellules de batterie 2 sera d'abord transmise aux plaques de refroidissement 5', puis indirectement au liquide de refroidissement LR par les parties du boîtier 3 qui enveloppent les extrémités des plaques de refroidissement 5'.

Dans la configuration représentée sur la Fig. 8, chacune des plaques de refroidissement 5' est en forme de U et comprend une base 53' reliant une branche supérieure 52' à une branche inférieure 51'. La base 53' est en contact avec au moins une cellule de batterie 2 et chacune des branches 51', 52' est positionnée respectivement dans le canal de refroidissement 4 de la paroi inférieure 31, respectivement supérieure 32, du boîtier 3. Dans cette configuration, les plaques de refroidissement 5' seront avantageusement collées sur les panneaux 34, 35 du boîtier 3 au niveau de leurs branches 51', 52'. Ainsi, la chaleur générée par les cellules de batterie 2 sera d'abord transmise aux plaques de refroidissement 5' au niveau de leur base 53', puis directement au liquide de refroidissement LR au niveau de leurs branches 51' et 52'.

Afin de montrer les avantages de l'unité de batterie de l'invention par rapport à une unité de batterie selon l'art antérieur, les exemples comparatifs suivants sont donnés.

Exemple 1 : On utilise une unité de batterie selon la configuration représentée sur les Fig. 1a et 1b. Cette unité de batterie possède une forme de parallélépipède rectangle, définie par une longueur de 277 mm, une largeur de 262 mm et une épaisseur de 254 mm. Elle comprend notamment 24 cellules C de type poche (« pouch cells ») regroupées sous forme de 12 blocs de deux cellules séparées par une plaque PS en mousse formée à partir d'un gel de silice, les cellules C sont disposées à l'intérieur d'un boîtier B en matière plastique. Le boîtier B repose sur un support S à l'intérieur duquel circule un liquide de refroidissement LR. Le transfert thermique s'opère au moyen de plaques conductrices PC en aluminium et en forme de L, chaque plaque PC étant disposée entre deux blocs de cellules adjacents. Chaque cellule C possède une forme de parallélépipède rectangle, définie par une longueur de 227 mm, une largeur de 250 mm et une épaisseur de 10.5 mm. La chaleur dégagée par chaque cellule C est de 10 W. Les conductivités thermiques λ respectives des différents éléments constitutifs de cette unité de batterie sont données dans le tableau 1 ci-dessous :

**[tableau 1]**

| Eléments constitutifs | Cellule | Liquide de refroidissement | Plaque PS | Boîtier B | Plaque PC |
|---|---|---|---|---|---|
| Conductivité thermique (en W/m.K) | 35 | 0.6203 | 2 | 0.25 | 237 |

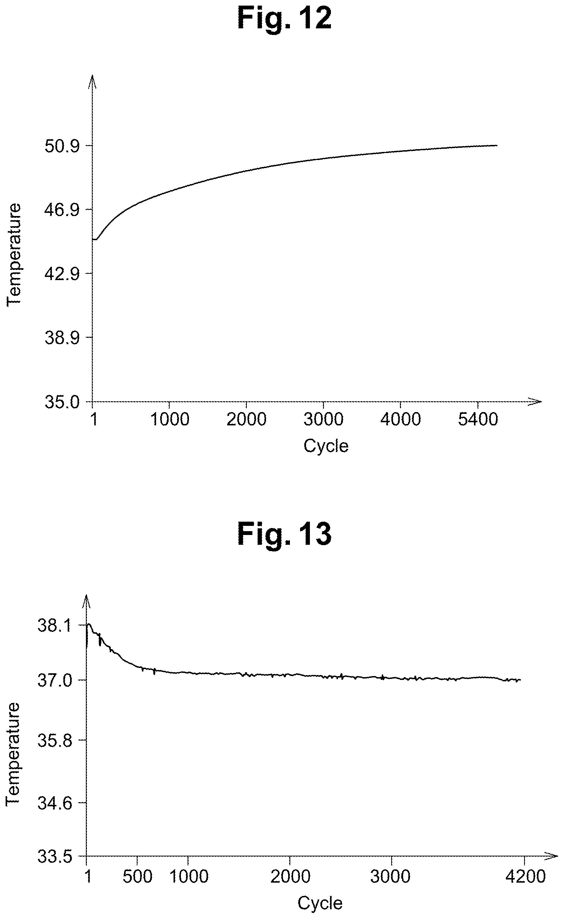

En référence à la figure 12, il est représenté un diagramme représentant les variations de température (exprimée en °C) des cellules C en fonction des cycles de refroidissement (exprimés en secondes). On observe ainsi que la température augmente progressivement d'une température initiale de 45°C à une température finale de 50.9 °C. Cette température finale est trop élevée et pourrait potentiellement engendrer un risque d'incendie, ou tout au moins une dégradation importante des cellules.

Exemple 2 : On utilise une unité de batterie selon la configuration représentée sur les Fig. 2 à 4. Cette unité de batterie 1 possède une forme de parallélépipède rectangle, définie par une longueur de 316 mm, une largeur de 330 mm et une épaisseur de 132 mm. Elle comprend notamment 24 cellules 2 de type poche (« pouch cells ») regroupées sous forme de 12 blocs 2' de deux cellules séparées par une plaque 8 en mousse formée à partir d'un gel de silice, les cellules 2 sont disposées à l'intérieur d'un boîtier 3 en matière plastique à l'intérieur duquel circule un liquide de refroidissement LR. Le transfert thermique s'opère au moyen de plaques de refroidissement 5 en matière plastique traversées par une pluralité de canaux internes 53, chaque plaque 5 étant disposée entre deux blocs 2' de cellules adjacents. Chaque cellule 2 possède une forme de parallélépipède rectangle, définie par une longueur de 100 mm, une largeur de 302 mm et une épaisseur de 11.7 mm. La chaleur dégagée par chaque cellule 2 est de 20 W. Les conductivités thermiques λ respectives des différents éléments constitutifs de cette unité de batterie sont données dans le tableau 2 ci-dessous :

**[tableau 2]**

| Eléments constitutifs | Cellule | Liquide de refroidissement | Plaque 8 | Boîtier 3 | Plaque 5 |
|---|---|---|---|---|---|
| Conductivité thermique (en W/m.K) | 35 | 0.6203 | 2 | 0.25 | 0.25 |

En référence à la figure 13, il est représenté un diagramme représentant les variations de température (exprimée en °C) des cellules C en fonction des cycles de refroidissement (exprimés en secondes). On observe ainsi que la température diminue légèrement d'une température initiale de 38.1 °C à une température finale de 35.3 °C. Cette température finale relativement basse permet d'éviter qu'une dégradation des cellules se produise et assure un fonctionnement optimal de l'unité de batterie.

Exemple 3 : On utilise une unité de batterie selon la configuration représentée sur les Fig. 5, 6 et 7a, 7b. Cette unité de batterie 1' possède une forme de parallélépipède rectangle, définie par une longueur de 305 mm, une largeur de 330 mm et une épaisseur de 132 mm. Elle comprend notamment 24 cellules 2 de type poche (« pouch cells ») regroupées sous forme de 12 blocs 2' de deux cellules séparées par une plaque 8 en mousse formée à partir d'un gel de silice, les cellules 2 sont disposées à l'intérieur d'un boîtier 3 en matière plastique HCPC à l'intérieur duquel circule un liquide de refroidissement LR. Le transfert thermique s'opère au moyen de plaques de refroidissement 5' en matière plastique HCPC et de forme sensiblement plate, chaque plaque 5 étant disposée entre deux blocs 2' de cellules adjacents. Chaque cellule 2 possède une forme de parallélépipède rectangle, définie par une longueur de 100 mm, une largeur de 302 mm et une épaisseur de 11.7 mm. La chaleur dégagée par chaque cellule 2 est de 20 W. Les conductivités thermiques λ respectives des différents éléments constitutifs de cette unité de batterie sont données dans le tableau 3 ci-dessous :

**[tableau 3]**

| Eléments constitutifs | Cellule | Liquide de refroidissement | Plaque 8 | Boîtier 3 | Plaque 5' |
|---|---|---|---|---|---|
| Conductivité thermique (en W/m.K) | 35 | 0.6203 | 2 | 0.25 | 221 |

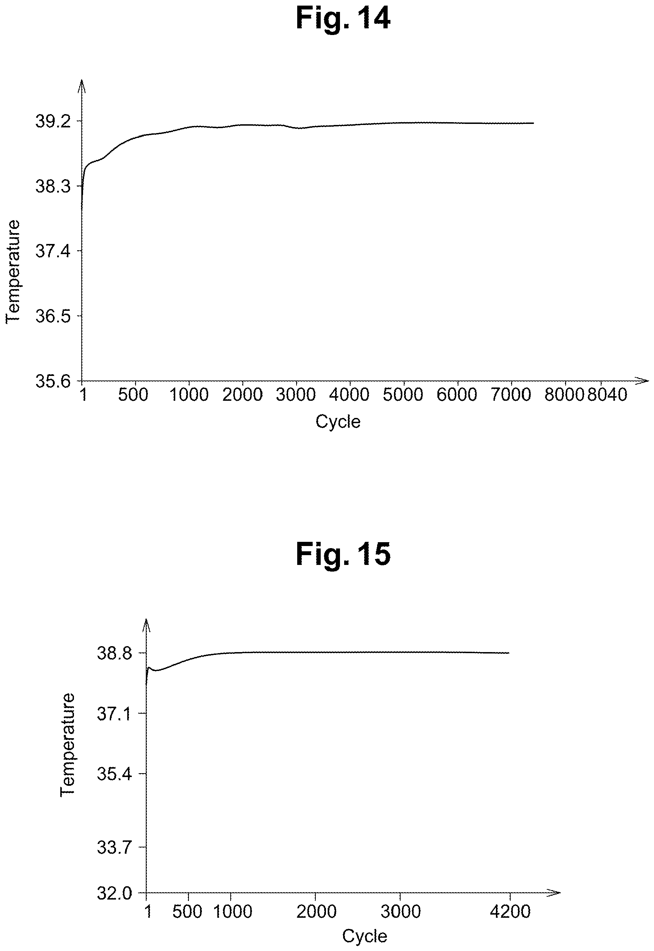

En référence à la figure 14, il est représenté un diagramme représentant les variations de température (exprimée en °C) des cellules C en fonction des cycles de refroidissement (exprimés en secondes). On observe ainsi que la température augmente légèrement d'une température initiale de 38 °C à une température finale de 39.2 °C. Cette température finale relativement basse permet d'éviter qu'une dégradation des cellules se produise et assure un bon fonctionnement de l'unité de batterie.

Exemple 4 : On utilise une unité de batterie selon la configuration représentée sur les Fig. 5 et 8. Cette unité de batterie 1' possède une forme de parallélépipède rectangle, définie par une longueur de 299 mm, une largeur de 330 mm et une épaisseur de 132 mm. Elle comprend notamment 24 cellules 2 de type poche (« pouch cells ») regroupées sous forme de 12 blocs 2' de deux cellules séparées par une plaque 8 en mousse formée à partir d'un gel de silice, les cellules 2 sont disposées à l'intérieur d'un boîtier 3 en matière plastique à l'intérieur duquel circule un liquide de refroidissement LR. Le transfert thermique s'opère au moyen de plaques de refroidissement 5' en aluminium et en forme de L, chaque plaque 5 étant disposée entre deux blocs 2' de cellules adjacents. Chaque cellule 2 possède une forme de parallélépipède rectangle, définie par une longueur de 100 mm, une largeur de 302 mm et une épaisseur de 11.7 mm. La chaleur dégagée par chaque cellule 2 est de 20 W. Les conductivités thermiques λ respectives des différents éléments constitutifs de cette unité de batterie sont données dans le tableau 4 ci-dessous :

**[tableau 4]**

| Eléments constitutifs | Cellule | Liquide de refroidissement | Plaque 8 | Boîtier 3 | Plaque 5' |
|---|---|---|---|---|---|
| Conductivité thermique (en W/m.K) | 35 | 0.6203 | 2 | 0.25 | 237 |

En référence à la figure 15, il est représenté un diagramme représentant les variations de température (exprimée en °C) des cellules C en fonction des cycles de refroidissement (exprimés en secondes). On observe ainsi que la température augmente légèrement d'une température initiale de 38 °C à une température finale de 40.9 °C. Cette température finale relativement basse permet d'éviter qu'une dégradation des cellules se produise et assure un bon fonctionnement de l'unité de batterie.

## Revendications

1. Unité de batterie (1, 1'), notamment pour véhicule automobile électrique ou hybride, comprenant :
- une pluralité de cellules de batterie (2), éventuellement regroupées physiquement en modules (2') de deux ou plusieurs cellules de batteries (2),
- un boîtier (3) logeant et entourant ladite pluralité de cellules de batterie (2), ledit boîtier (3) comprenant une paroi inférieure (31), sur laquelle repose les cellules de batterie (2), une paroi supérieure (32), disposée au-dessus des cellules de batterie (2), et des parois latérales (33) reliant les parois inférieure (31) et supérieure (32),
dans laquelle chacune des parois inférieure (31) et supérieure (32) du boîtier (3) est traversée par au moins un canal de refroidissement (4), le long duquel un liquide de refroidissement (LR) peut s'écouler, ledit canal de refroidissement (4) étant configuré pour couvrir l'intégralité de la surface de la paroi inférieure (31), respectivement de la paroi supérieure (32), et dans laquelle les parois inférieure (31) et supérieure (32) du boîtier (3) sont reliées par une pluralité de plaques de refroidissement (5, 5'), chaque plaque de refroidissement (5, 5') étant disposée entre deux cellules de batterie (2) adjacentes, ou modules (2') de cellules de batterie adjacents, ou étant en contact avec au moins une cellule de batterie (2), et étant configurée pour transmettre la chaleur générée par les cellules de batterie (2) au liquide de refroidissement (LR),
**caractérisée en ce que** les plaques de refroidissement (5') sont en forme de U, chacune des plaques de refroidissement (5') comprenant une base (53') reliant une branche supérieure (52') à une branche inférieure (51'), la base (53') étant en contact avec au moins une cellule de batterie (2) et la branche inférieure (51'), respectivement supérieure (52'), étant positionnée dans le canal de refroidissement (4) de la paroi inférieure (31), respectivement supérieure (32), du boîtier (3).

2. Unité de batterie (1) selon la revendication 1, **caractérisée en ce que** chaque plaque de refroidissement (5) est formée dans un matériau plastique et comporte une pluralité de canaux internes (53) s'étendant depuis une extrémité supérieure (52) débouchant dans le canal de refroidissement (4) de la paroi supérieure (32) jusqu'à une extrémité inférieure (53) débouchant dans le canal de refroidissement (4) de la paroi inférieure (31), permettant ainsi une circulation du liquide de refroidissement (LR) de la paroi supérieure (32) vers la paroi inférieure (31) au travers desdits canaux internes (53).

3. Unité de batterie (1') selon la revendication 1, **caractérisée en ce que** les plaques de refroidissement (5') sont formées dans un matériau possédant une conductivité thermique élevée.

4. Unité de batterie (1') selon la revendication 3, **caractérisée en ce que** le matériau constitutif des plaques de refroidissement (5') possède une conductivité thermique supérieure ou égale à 20 W.m⁻¹.K⁻¹, et, de préférence, supérieure ou égale à 100 W.m⁻¹.K⁻¹.

5. Unité de batterie (1') selon la revendication 3 ou 4, **caractérisée en ce que** les plaques de refroidissement (5') sont formées dans un matériau plastique conducteur thermiquement.

6. Unité de batterie (1') selon la revendication 3 ou 4, **caractérisée en ce que** les plaques de refroidissement (5') sont formées en aluminium.

7. Unité de batterie (1') selon l'une des revendications 3 à 6, **caractérisée en ce que** les plaques de refroidissement (5') sont sensiblement plates.

8. Unité de batterie (1') selon la revendication 7, **caractérisée en ce que** les plaques de refroidissement (5') sont surmoulées avec le boîtier (3).

9. Unité de batterie (1') selon l'une des revendications 3 à 6, **caractérisée en ce que** les plaques de refroidissement (5') sont collées sur le boîtier (3).

10. Unité de batterie (1) selon l'une quelconque des revendications précédentes, **caractérisée en ce que** le boîtier (3) est muni d'au moins un orifice d'entrée (36) et d'au moins un orifice de sortie (37), ledit orifice d'entrée (36), respectivement de sortie (37), communiquant avec le canal de refroidissement (4) de manière à permettre l'entrée, respectivement la sortie, du liquide de refroidissement (LR) à l'intérieur, respectivement à l'extérieur, du boîtier (3).

11. Unité de batterie (1, 1') selon l'une quelconque des revendications précédentes, **caractérisée en ce que** le boîtier (3) est formé par l'assemblage de plusieurs panneaux de boîtier (34, 35) fixées ensemble par des moyens de connexion (7), lesdits panneaux de boîtier (34, 35) comprenant au moins deux panneaux d'extrémité (34) disposés à chacune des extrémités du boîtier (3) et une pluralité de panneaux intermédiaires (35) intercalés entre lesdits panneaux d'extrémité (34).

12. Unité de batterie (1, 1') selon la revendication 11, **caractérisée en ce que** les moyens de connexion sont des vis (7) coopérant avec des filetages correspondant formés à l'intérieur des panneaux de boîtier (34, 35).

13. Unité de batterie (1, 1') selon la revendication 11 ou 12, **caractérisée en ce que** au moins l'un des panneaux d'extrémité (34) est équipé d'un orifice d'entrée (36) et/ou d'un orifice de sortie (37), ledit orifice d'entrée (36) et/ou de sortie (37) communiquant avec le canal de refroidissement (4) de manière à permettre l'entrée, respectivement la sortie, du liquide de refroidissement (LR) à l'intérieur, respectivement à l'extérieur, du boîtier (3).

14. Unité de batterie (1, 1') selon l'une des revendications 11 à 13, **caractérisée en ce que** chaque panneau de boîtier (34, 35) est solidaire d'une seule plaque de refroidissement (5, 5').

15. Véhicule automobile, en particulier électrique ou hybride, équipé d'au moins une unité de batterie (1, 1') selon l'une quelconque des revendications précédentes.

## Patentansprüche

1. Batterieeinheit (1, 1'), insbesondere für elektrische oder hybride Kraftfahrzeuge, umfassend:
- eine Vielzahl von Batteriezellen (2), gegebenenfalls physisch in Modulen (2') aus zwei oder mehr Batteriezellen (2) gruppiert,
- ein Gehäuse (3), das die Vielzahl von Batteriezellen (2) aufnimmt und umgibt, wobei das Gehäuse (3) eine untere Wand (31) umfasst, auf der die Batteriezellen (2) ruhen, eine obere Wand (32), die über den Batteriezellen (2) angeordnet ist, und seitliche Wände (33), die die untere (31) und die obere (32) Wand verbinden,
wobei jede der unteren (31) und oberen (32) Wände des Gehäuses (3) von mindestens einem Kühlkanal (4) durchdrungen ist, entlang dem ein Kühlmittel (LR) fließen kann, wobei der Kühlkanal (4) konfiguriert ist, um die gesamte Oberfläche der unteren Wand (31) beziehungsweise der oberen Wand (32) abzudecken, und wobei die unteren (31) und oberen (32) Wände des Gehäuses (3) durch eine Vielzahl von Kühlplatten (5, 5') verbunden sind, wobei jede Kühlplatte (5, 5') zwischen zwei benachbarten Batteriezellen (2) oder benachbarten Batteriezellenmodulen (2') angeordnet ist oder mit mindestens einer Batteriezelle (2) in Kontakt steht, und konfiguriert ist, um die von den Batteriezellen (2) erzeugte Wärme an das Kühlmittel (LR) zu übertragen,
**dadurch gekennzeichnet, dass** die Kühlplatten (5') u-förmig sind, wobei jede der Kühlplatten (5') eine Basis (53') umfasst, die einen oberen Schenkel (52') mit einem unteren Schenkel (51') verbindet, wobei die Basis (53') mit mindestens einer Batteriezelle (2) in Kontakt steht und der untere (51') beziehungsweise der obere (52') Schenkel im Kühlkanal (4) der unteren (31) beziehungsweise der oberen (32) Wand des Gehäuses (3) positioniert ist.

2. Batterieeinheit (1) nach Anspruch 1, **dadurch gekennzeichnet, dass** jede Kühlplatte (5) aus einem Kunststoffmaterial gebildet ist, und eine Vielzahl von internen Kanälen (53) beinhaltet, die sich von einem oberen Ende (52), das in den Kühlkanal (4) der oberen Wand (32) mündet, bis zu einem unteren Ende (53), das in den Kühlkanal (4) der unteren Wand (31) mündet, erstrecken, wodurch eine Zirkulation des Kühlmittels (LR) von der oberen Wand (32) zur unteren Wand (31) durch die inneren Kanäle (53) ermöglicht wird.

3. Batterieeinheit (1') nach Anspruch 1, **dadurch gekennzeichnet, dass** die Kühlplatten (5') aus einem Material gebildet sind, das eine hohe Wärmeleitfähigkeit aufweist.

4. Batterieeinheit (1') nach Anspruch 3, **dadurch gekennzeichnet, dass** das Material, aus dem die Kühlplatten (5') bestehen, eine Wärmeleitfähigkeit von 20 W.m⁻¹.K⁻¹ oder mehr aufweist und vorzugsweise größer oder gleich 100 W.m⁻¹.K⁻¹.

5. Batterieeinheit (1') nach Anspruch 3 oder 4, **dadurch gekennzeichnet, dass** die Kühlplatten (5') aus einem thermisch leitfähigem Kunststoffmaterial gebildet sind.

6. Batterieeinheit (1') nach Anspruch 3 oder 4, **dadurch gekennzeichnet, dass** die Kühlplatten (5') aus Aluminium gebildet sind.

7. Batterieeinheit (1') nach einem der Ansprüche 3 bis 6, **dadurch gekennzeichnet, dass** die Kühlplatten (5') im Wesentlichen eben sind.

8. Batterieeinheit (1') nach Anspruch 7, **dadurch gekennzeichnet, dass** die Kühlplatten (5') mit dem Gehäuse (3) umformt sind.

9. Batterieeinheit (1') nach einem der Ansprüche 3 bis 6, **dadurch gekennzeichnet, dass** die Kühlplatten (5') auf das Gehäuse (3) geklebt sind.

10. Batterieeinheit (1) nach einem der vorhergehenden Ansprüche, **dadurch gekennzeichnet, dass** das Gehäuse (3) mit mindestens einer Einlassöffnung (36) und mindestens einer Auslassöffnung (37) versehen ist, wobei die Einlass- (36) beziehungsweise die Auslassöffnung (37) mit dem Kühlkanal (4) in Verbindung steht, um den Einlass beziehungsweise den Auslass des Kühlmittels (LR) in das beziehungsweise aus dem Gehäuse (3) zu ermöglichen.

11. Batterieeinheit (1, 1') nach einem der vorhergehenden Ansprüche, **dadurch gekennzeichnet, dass** das Gehäuse (3) durch Zusammenfügen mehrerer Gehäusetafeln (34, 35) gebildet ist, die durch Verbindungsmittel (7) aneinander befestigt sind, wobei die Gehäusetafeln (34, 35) mindestens zwei Endtafeln (34) umfassen, die an jedem Ende des Gehäuses (3) angeordnet sind, und eine Vielzahl von Mittentafeln (35), die zwischen die Endtafeln (34) gestellt sind.

12. Batterieeinheit (1, 1') nach Anspruch 11, **dadurch gekennzeichnet, dass** die Verbindungsmittel Schrauben (7) sind, die mit entsprechenden Gewinden zusammenwirken, die innerhalb der Gehäusetafeln (34, 35) ausgebildet sind.

13. Batterieeinheit (1, 1') nach Anspruch 11 oder 12, **dadurch gekennzeichnet, dass** mindestens eine der Endtafeln (34) mit einer Einlassöffnung (36) und/oder einer Auslassöffnung (37) ausgestattet ist, wobei die Einlass- (36) und/oder die Auslassöffnung (37) mit dem Kühlkanal (4) in Verbindung steht, um den Einlass beziehungsweise den Auslass des Kühlmittels (LR) in das beziehungsweise aus dem Gehäuse (3) zu ermöglichen.

14. Batterieeinheit (1, 1') nach einem der Ansprüche 11 bis 13, **dadurch gekennzeichnet, dass** jede Gehäusetafel (34, 35) mit einer einzelnen Kühlplatte (5, 5') fest verbunden ist.

15. Kraftfahrzeug, namentlich elektrisch- oder hybrid, ausgestattet mit mindestens einer Batterieeinheit (1, 1') nach einem der vorhergehenden Ansprüche.

## Claims

1. A battery unit (1, 1'), in particular for an electric or hybrid motor vehicle, comprising:
- a plurality of battery cells (2), optionally physically grouped together in modules (2') of two or more battery cells (2),
- a casing (3) housing and surrounding said plurality of battery cells (2), said casing (3) comprising a lower wall (31), on which the battery cells (2) rest, an upper wall (32), arranged above the battery cells (2), and lateral walls (33) connecting the lower (31) and upper (32) walls,
wherein each of the lower (31) and upper (32) walls of the casing (3) is traversed by at least one cooling channel (4), along which a coolant (LR) can flow, said cooling channel (4) being configured to cover the entire surface of the lower wall (31), respectively of the upper wall (32), and wherein the lower (31) and upper (32) walls of the casing (3) are connected by a plurality of cooling plates (5, 5'), each cooling plate (5, 5') being disposed between two adjacent battery cells (2), or modules (2') of adjacent battery cells, or being in contact with at least one battery cell (2), and being configured to transmit the heat generated by the battery cells (2) to the coolant (LR),
**characterized in that** the cooling plates (5') are U-shaped, each cooling plate (5') comprising a base (53') connecting an upper branch (52') to a lower branch (51'), the base (53') being in contact with at least one battery cell (2) and the lower branch (51'), respectively the upper branch (52'), being positioned in the cooling channel (4) of the lower wall (31), respectively of the upper wall (32), of the casing (3).

2. The battery unit (1) according to claim 1, **characterized in that** each cooling plate (5) is formed in a plastic material and includes a plurality of inner channels (53) extending from an upper end (52) opening into the cooling channel (4) of the upper wall (32) to a lower end (53) opening into the cooling channel (4) of the lower wall (31), thus allowing a circulation of the coolant (LR) from the upper wall (32) to the lower wall (31) through said inner channels (53).

3. The battery unit (1') according to claim 1, **characterized in that** the cooling plates (5') are formed in a material having high thermal conductivity.

4. The battery unit (1') according to claim 3, **characterized in that** the constituent material of the cooling plates (5') has a thermal conductivity greater than or equal to 20 W.m⁻¹.K⁻¹, and preferably greater or equal to 100 W.m⁻¹.K⁻¹.

5. The battery unit (1') according to claim 3 or 4, **characterized in that** the cooling plates (5') are formed in a thermally conductive plastic material.

6. The battery unit (1') according to claim 3 or 4, **characterized in that** the cooling plates (5') are formed in aluminum.

7. The battery unit (1') according to any of claims 3 to 6, **characterized in that** the cooling plates (5') are substantially flat.

8. The battery unit (1') according to claim 7, **characterized in that** the cooling plates (5') are overmolded with the casing (3).

9. The battery unit (1') according to any of claims 3 to 6, **characterized in that** the cooling plates (5') are glued on the casing (3).

10. The battery unit (1) according to any one of the preceding claims, **characterized in that** the casing (3) is provided with at least one inlet orifice (36) and at least one outlet orifice (37), said inlet (36), respectively outlet (37) orifice, communicating with the cooling channel (4) so as to allow the inlet, respectively the outlet, of the coolant (LR) inside, respectively outside, the casing (3).

11. The battery unit (1, 1') according to any one of the preceding claims, **characterized in that** the casing (3) is formed by the assembly of several casing panels (34, 35) fixed together by connection means (7), said casing panels (34, 35) comprising at least two end panels (34) disposed at each end of the casing (3) and a plurality of intermediate panels (35) interposed between said end panels (34).

12. The battery unit (1, 1') according to claim 11, **characterized in that** the connection means are screws (7) cooperating with corresponding threads formed inside the casing panels (34, 35).

13. The battery unit (1, 1') according to claim 11 or 12, **characterized in that** at least one of the end panels (34) is equipped with an inlet (36) and/or an outlet (37) orifice, said inlet (36) and/or outlet (37) orifice communicating with the cooling channel (4) so as to allow the inlet, respectively the outlet, of the coolant (LR) inside, respectively outside, the casing (3).

14. The battery unit (1, 1') according to any of claims 11 to 13, **characterized in that** each casing panel (34, 35) is secured to a single cooling plate (5, 5').

15. A motor vehicle, in particular an electric or hybrid motor vehicle, equipped with at least one battery unit (1, 1') according to any one of the preceding claims.
